# EUROPÄISCHE PATENTSCHRIFT

(11) **EP 0 502 375 B1**
(45) Veröffentlichungstag und Bekanntmachung des Hinweises auf die Patenterteilung: **23.08.1995**
(21) Anmeldenummer: 92102913.8
(22) Anmeldetag: 21.02.1992
(51) Int. Cl.: C08F 285/00, C08L 51/00, C08L 27/06

(54) **Mehrstufiges Propfcopolymerisat und seine Verwendung zur Herstellung transparenter PVC-Formmassen**
Multi-stage graft copolymer and its use for the preparation of transparent PVC-moulding compositions
Polymère greffé à étapes multiples et son usage pour la préparation des compositions transparentes de moulage à base de PCV

(30) Priorität: 05.03.1991 DE 4106909
(43) Veröffentlichungstag der Anmeldung: 09.09.1992
(73) Patentinhaber: BASF Aktiengesellschaft, 67063 Ludwigshafen (DE)
(72) Erfinder: Goertz, Hans Helmut, Dr., W-6713 Freinsheim (DE); Hatzmann, Guenter, Dr., W-6906 Leimen (DE); Oschmann, Werner, Dr., W-6700 Ludwigshafen (DE)

(56) Entgegenhaltungen:
- EP-A- 0 082 717
- EP-A- 0 136 552
- EP-A- 0 374 814
- EP-A- 0 379 086
- US-A- 3 971 835

## Beschreibung

Die Erfindung betrifft Pfropfcopolymerisate, erhältlich durch
A) Emulsionspolymerisation von 5 bis 35 Gew.% eines Monomerengemischs aus
   a₁) 60 - 80 Gew.% mindestens eines vinylaromatischen Monomeren
   a₂) 20 - 40 Gew.% mindestens eines ethylenisch ungesättigten Nitrils
   a₃) 0 - 10 Gew.% mindestens eines zwei- oder mehrfach ethylenisch ungesättigten Monomeren und
   a₄) 0 - 10 Gew.% mindestens eines weiteren Monomeren,
B) anschließende Emulsionspolymerisation in Gegenwart des nach Stufe A) erhaltenen Emulsionspolymerisats von 20 - 45 Gew.% eines Monomerengemischs aus
   b₁) 50 - 75 Gew.% mindestens eines vinylaromatischen Monomeren,
   b₂) 25 - 50 Gew.% mindestens eines C₁-C₁₈ Alkylacrylats
   b₃) 0 - 10 Gew.% mindestens eines zwei- oder mehrfach ethylenisch ungesättigten Monomeren und
   b₄) 0 - 10 Gew.% mindestens eines weiteren Monomeren,
C) anschließende Emulsionspolymerisation in Gegenwart des nach Stufe B) erhaltenen Emulsionspolymerisats von 5 - 35 Gew.% eines Monomerengemisches aus
   c₁) 60 - 80 Gew.% mindestens eines vinylaromatischen Monomeren,
   c₂) 20 - 40 Gew.% mindestens eines ethylenisch ungesättigten Nitrils,
   c₃) 0 - 10 Gew.% mindestens eines zwei- oder mehrfach ethylenisch ungesättigten Monomeren und
   c₄) 0 - 10 Gew.% mindestens eines weiteren Monomeren und
D) anschließende Emulsionspolymerisation in Gegenwart des nach Stufe C) erhaltenen Emulsionspolymerisats von 15 - 45 Gew.% eines Monomerengemischs aus
   d₁) 80 - 99,9 Gew.% mindestens eines C₁ - C₁₈-Alkylacrylats
   d₂) 0,1 - 10 Gew.% mindestens eines zwei- oder mehrfach ethylenisch ungesättigten Monomeren und
   d₃) 0 - 20 Gew.% mindestens eines weiteren Monomeren,
wobei sich die Gewichtsprozente der in den Stufen A) bis D) eingesetzten Monomerengemische auf das Pfropfcopolymerisat beziehen und sich auf 100 Gew.% addieren.

weiterhin betrifft die Erfindung thermoplastische Formmassen, welche Pfropfcopolymerisate gemäß Anspruch 1 enthalten.

Als Modifizierungsmittel zur Verbesserung der Schlagzähigkeit von Polyvinylchlorid sind Pfropfcopolymerisate bekannt, bei denen im allgemeinen auf einen kautschukartigen (weichen) Kern (harte) Monomere, deren Homopolymere Glasübergangstemperaturen deutlich über 0°C aufweisen, aufgepfropft sind. (Aufbau weich-hart). Bei witterungsstabilen PVC-Formmassen werden als Kautschuke vorzugsweise Acrylatkautschuke eingesetzt.

In der EP-A-379 086 ist ein vierstufig aufgebautes Modifizierungsmittel zur Verbesserung der Schlagzähigkeit von transparenten PVC-Formmassen beschrieben, welches einen prinzipiell anderen Aufbau hat. Auf einen (harten) Kern aus vernetztem Polystyrol sind bei diesem Modifizierungsmittel nacheinander eine weiche, kautschukartige, Hülle aus Alkylacrylaten und abschließend wiederum harte Hüllen aus Styrol und Alkylmethacrylaten aufgebracht. (Aufbau hart-weich-hart).

Die Transparenz von Polyvinylchloridformmassen, welche dieses Modifizierungsmittel enthalten, ist jedoch für viele Anwendungen noch nicht ausreichend, insbesondere ist noch eine starke Opaleszenz (Blaustich) zu beobachten.

Aus der EP-A-136 552 ist ein Modifizierungsmittel für PVC mit wiederum andersartigem Aufbau bekannt. Das dort als Modifizierungsmittel zur Verbesserung der Schlagzähigkeit von PVC empfohlene Pfropfcopolymerisat hat einen kautschukartigen Kern, dann zunächst eine Hülle aus "harten" Monomeren und abschließend wieder eine kautschukartige Hülle (Aufbau: weich-hart-weich). Um die Schlagzähigkeit von PVC-Formmassen zu verbessern, wird dieses Pfropfcopolymerisat in Kombination mit einem Copolymeren, welches 3 - 30 Gew.% einer Säure enthält, eingesetzt.

Aufgabe dieser Erfindung war es, Pfropfcopolymerisate als Modifizierungsmittel für PVC zur Verfügung zu stellen, welche die Herstellung opaleszenzfreier, transparenter und witterungsbeständiger Formteile mit hoher Schlagzähigkeit ermöglichen.

Demgemäß wurden die eingangs definierten Pfropfcopolymerisate sowie ihre Verwendung als Modifizierungsmittel in thermoplastischen Formmassen gefunden.

Die Pfropfcopolymerisate sind erhältlich durch Emulsionspolymerisation von Monomerengemischen in vier Stufen in der Reihenfolge A-B-C-D.

Der Anteil der Monomerengemische in den einzelnen Stufen beträgt:
Stufe A: 5 - 35 Gew.%, bevorzugt 10 - 30 Gew.%
Stufe B: 20 - 45 Gew.%, bevorzugt 25 - 40 Gew.%
Stufe C: 5 - 35 Gew.%, bevorzugt 10 - 30 Gew.%
Stufe D: 15 - 45 Gew.%, bevorzugt 20 - 40 Gew.%
Die Gewichtsprozente der in den einzelnen Stufen eingesetzten Monomerengemische beziehen sich auf das Pfropfcopolymerisat.

Die Summe der Gewichtsprozente ergibt 100.

Bevorzugt besteht das Monomerengemisch der Stufe A) aus
a₁) 60 - 79,9 Gew.%, besonders bevorzugt 65-74,9 Gew.% mindestens eines vinylaromatischen Monomeren
a₂) 20 - 39,9 Gew.%, besonders bevorzugt 25 - 34,9 Gew.% mindestens eines ethylenisch ungesättigten Nitrils
a₃) 0,1 - 10 Gew.%, besonders bevorzugt 0,1 - 5 Gew.% mindestens eines zwei- oder mehrfach ethylenisch ungesättigten Monomeren und
a₄) 0 - 5 Gew.% mindestens eines weiteren Monomeren.

Bevorzugt besteht das Monomerengemisch der Stufe B) aus
b₁) 50 - 74,9 Gew.%, besonders bevorzugt 55 - 74,9 Gew.% mindestens eines vinylaromatischen Monomeren,
b₂) 25 - 49,9 Gew.%, besonders bevorzugt 25 - 44,9 Gew.%, mindestens eines C₁ - C₁₈-Alkylacrylats,
b₃) 0,1 - 10 Gew.%, besonders bevorzugt 0,1 - 5 Gew.% mindestens eines zwei- oder mehrfach ethylenisch ungesättigten Monomeren und
b₄) 0 - 5 Gew.% mindestens eines weiteren Monomeren
Bevorzugt besteht das Monomerengemisch der Stufe C) aus
c₁) 60 - 79,9 Gew.%, besonders bevorzugt 65 - 79,9 Gew.% mindestens eines vinylaromatischen Monomeren,
c₂) 20 - 39,9 Gew.%, besonders bevorzugt 20 - 34,9 Gew.%, mindestens eines ethylenisch ungesättigten Nitrils,
c₃) 0,1 - 10 Gew.%, besonders bevorzugt 0,1 - 5 Gew.% mindestens eines zwei- oder mehrfach ethylenisch ungesättigten Monomeren und
c₄) 0 - 5 Gew.% mindestens eines weiteren Monomeren
Bevorzugt besteht das Monomerengemisch der Stufe D) aus
d₁) 90 - 99,9 Gew.%, besonders bevorzugt 95 - 99,9 Gew.% mindestens eines C₁-C₁₈-Alkylacrylats
d₂) 0,1 - 10 Gew.%, besonders bevorzugt 0,1 - 5 Gew.%, mindestens eines zwei- oder mehrfach ethylenisch ungesättigten Monomeren und
d₃) 0 - 10 Gew.% mindestens eines weiteren Monomeren
Als vinylaromatische Monomere eignen sich insbesondere Styrol sowie dessen ein- oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol sowie α-Methylstyrol.

Besonders bevorzugt ist Styrol.

Als ethylenisch ungesättigte Nitrile kommen besonders Acrylnitril und Methacrylnitril in Betracht.

Unter den Alkylacrylaten sind die C₁-C₁₂-Alkylacrylate, z.B. Methylacrylat, Ethylacrylat, Butylacrylat, 2-Ethylhexylacrylat und Laurylacrylat, von Bedeutung. Besonders bevorzugt sind die C₄-C₈-Alkylacrylate.

Als vernetzend wirkende zwei- oder mehrfach ethylenisch ungesättigte Monomere sind z.B. Allyl-, Methallyl- und Vinylester von Di-, Tri- oder höheren Carbonsäuren wie z.B. Adipinsäuredivinylester, Phthalsäurediallylester, Maleinsäurediallylester, Fumarsäurediallylester; Allyl-, Methallyl- und Vinylether mehrfunktioneller Alkohole wie Ethylenglykoldivinylether, 1,3-Butandioldivinylether, 1,4-Butandioldivinylether, Pentaerythrittriallylether; Ester der Acryl- oder Methacrylsäure mit mehrwertigen Alkoholen wie Ethylenglykoldi(meth)acrylat, 1,2-Propandioldi(meth)acrylat, 1,3-Propandioldi(meth)acrylat, 1,3-Butandioldi(meth)acrylat, 1,4-Butandioldi(meth)acrylat, Oligo- oder Polyethylenglykoldi(meth)acrylat, Divinylbenzol oder Mischungen der genannten Substanzen geeignet. Bevorzugt sind zweifach ungesättigte Monomere, insbesondere Divinylbenzol sowie 1,3-Butandioldi(meth)acrylat und 1,4-Butandioldi(meth)acrylat. Neben nichtkonjugierten ethylenisch zwei- oder mehrfach ungesättigten Monomeren können auch konjugierte zwei- oder mehrfach ungesättigte Monomere eingesetzt werden. Bevorzugt sind hier ebenfalls zweifach ethylenisch ungesättigte Monomere, insbesondere Butadien und Isopren.

Weitere Monomere können z.B. Vinylether wie Vinylisobutylether sowie Vinylester wie Vinylacetat oder Vinylpropionat oder C₁-C₁₆, insbesondere C₁-C₈-Alkylmethacrylate sein. In den Stufen A und C kommen als weitere Monomere auch C₁-C₁₈-Alkylacrylate in Betracht. Der Einsatz weiterer Monomere ist für eine Verbesserung der Schlagzähigkeit und Transparenz nicht zwingend notwendig, kann jedoch in einigen Fällen vorteilhaft sein.

Die Herstellung der Pfropfcopolymerisate erfolgt im allgemeinen durch Emulsionspolymerisation.

Als Emulgatoren dienen z.B. Natrium-, Kalium- oder Ammoniumsalze von gesättigten oder ungesättigten C₈-C₂₀-Fettsäuren wie Laurinsäure, Stearinsäure, Palmitinsäure, ölsäure u.a., C₈-C₂₀-Alkylsulfonsäuren, Schwefelsäure-C₈-C₂₀-alkylestern, Alkylbenzolsulfonsäuren, Abiethinsäure und deren Derivaten, Sulfobernsteinsäurealkylestern, alkylierten Diphenylethersulfonsäuren.

Durch die Wahl von Art und Menge des Emulgators kann in bekannter Weise die Teilchengröße der Emulsion eingestellt werden. Die mittlere Teilchengröße (d₅₀) kann zwischen 50 und 300 nm liegen. Bevorzugt liegt sie im Bereich von 70 bis 200 nm, besonders bevorzugt zwischen 70 und 150 nm.

Als Initiatoren können wasserlösliche thermisch zerfallende Initiatoren oder Redoxsysteme eingesetzt werden. Geeignete thermisch zerfallende Initiatoren sind beispielsweise Natrium-, Kalium- oder Ammoniumpersulfat sowie wasserlösliche Azoverbindungen wie das Natriumsalz der 4,4'-Azo-bis-(4,4'-cyanopentansäure). Als Redoxsysteme kommen beispielsweise Cumolhydroperoxid, Diisopropylbenzolhydroperoxid, tert.-Butylhydroperoxid, tert.-Butylperacetat in Kombination mit Reduktionsmitteln wie Natriumformaldehydsulfoxylat oder Ascorbinsäure in Gegenwart von Eisensalzen in Frage. Auch die genannten Persulfate können in Kombination mit Reduktionsmitteln wie Natrium- oder Kaliummetabisulfit in Redoxsystemen eingesetzt werden.

Die Polymerisationstemperatur liegt im allgemeinen zwischen 10 und 100°C, bevorzugt bei 50 bis 90°C.

Es werden zunächst die Monomeren der Stufe A polymerisiert. Danach werden die Monomeren der weiteren Stufen in der Reihenfolge B-C-D zur wäßrigen Emulsion gegeben. Die Monomeren in den einzelnen Stufen werden im allgemeinen zu mehr als 70 Gew.-%, bevorzugt zu mehr als 95 Gew.-%, besonders bevorzugt zu mehr als 99 Gew.-% auspolymerisiert, bevor mit der Zugabe der Monomeren einer weiteren Stufe begonnen wird.

Der Feststoffgehalt der so erhältlichen Dispersionen beträgt bevorzugt 30 bis 60 Gew.-%.

Das Pfropfcopolymerisat kann aus der Dispersion in bekannter Weise z.B. durch Fällung oder Sprühtrocknung isoliert und mit einem Thermoplasten und gegebenenfalls weiteren Zusatzstoffen wie Stabilisatoren, Gleitmitteln, Füllstoffen, Farbstoffen, Pigmenten oder weiteren Modifizierungsmitteln zur Verbesserung der Transparenz, Witterungsbeständigkeit, Wärmeformbeständigkeit und Schlagzähigkeit nach bekannten Verfahren gemischt und in Extrudern, Knetern oder Walzen verarbeitet werden.

Die thermoplastischen Formmassen enthalten geeigneterweise 2-40 Gew.-%, insbesondere 5-30 Gew.-% der erfindungsgemäßen Pfropfcopolymerisate.

Die erfindungsgemäßen Pfropfcopolymerisate sind insbesondere als Modifizierungsmittel für Formmassen auf Basis von Polyvinylhalogeniden geeignet.

Bevorzugt sind daher thermoplastische Formmassen enthaltend 60-98 Gew.-%, vorzugsweise 70-95 Gew.-% eines Polyvinylhalogenids und

2-40 Gew.-%, vorzugsweise 5 bis 30 Gew.-% des Pfropfcopolymerisats.

Als Polyvinylhalogenide sind vor allem Homo- und Copolymere des Vinylchlorids mit mindestens 80 Gew.-% Vinylchlorideinheiten oder nachchloriertes Polyvinylchlorid geeignet.

Besonders bevorzugt sind Homopolymere des Vinylchlorids (Polyvinylchlorid).

Die Verarbeitung der Formmassen erfolgt durch für Thermoplaste übliche Methoden (Extrudieren, Spritzgießen, Kalandrieren, Pressen, Tiefziehen).

Es werden Formteile mit hoher Schlagzähigkeit erhalten, die eine hohe Transparenz besitzen, witterungsstabil sind und im wesentlichen keine Opaleszenz, bzw. keinen Blaustich aufweisen.

### Beispiele

### Herstellung der Pfropfcopolymerisate

### Beispiel 1

In einem mit Rührung, Temperierung und Dosiervorrichtungen ausgestatteten Reaktionsgefäß wurde eine Mischung aus 2 kg Wasser, 2,8 g eines handelsüblichen Natriumalkylsulfonates mit einer mittleren Kettenlänge von etwa 14 Kohlenstoffatomen, 1,5 g Tetranatriumpyrophosphat und 1,7 g Natriumperoxodisulfat unter Rühren auf 75°C erwärmt. (Alle folgenden Schritte wurden bei dieser Temperatur ausgeführt.) Dann wurde eine Mischung von 204 g Styrol, 90 g Acrylnitril und 6 g Butandiol-1,4-diacrylat in 45 min zudosiert und 1 h nachreagiert. Hiernach wurden innerhalb 1 h parallel eine Lösung von 2 g Natriumperoxodisulfat und 4 g Emulgator (s.o.) in 300 g Wasser und eine Mischung aus 455 g Styrol, 231 g n-Butylacrylat und 14 g Butadien zudosiert und 30 min nachpolymerisiert. Nun werden innerhalb 1 h wiederum parallel eine Lösung von 2 g Natriumperoxodisulfat und 8 g Emulgator (s.o.) in 300 g Wasser und eine Mischung von 350 g Styrol, 145 g Acrylnitril und 5 g Butandiol-1,4-diacrylat zudosiert und 1 h nachpolymerisiert. Hiernach wurde eine Lösung von 2 g Natriumperoxodisulfat und 6,4 g Emulgator(s.o.) in 300 g Wasser zugegeben und anschließend eine Mischung aus 485 g n-Butylacrylat und 15 g Butadien innerhalb 1 h zudosiert. Nach weiteren 1 1/2 h wurde gekühlt. Die erhaltene Dispersion wies einen Feststoffgehalt von 40,1 Gew.-% und einen pH-Wert von 3,8 auf. Sie wurde bei -20°C koaguliert, der Feststoff abgetrennt und getrocknet.

Das Pfropfcopolymerisat hatte folgenden Aufbau.
15 Gew.-% Stufe A
aus 68 Gew.-% S
30 Gew.-% AN
2 Gew.-% BDA
35 Gew.-% Stufe B
aus 65 Gew.-% S
33 Gew.-% n-BA
2 Gew.-% B
25 Gew.-% Stufe C
aus 70 Gew.-% S
29 Gew.-% AN
1 Gew.-% BDA
25 Gew.-% Stufe D
aus 97 Gew.-% n-BA
3 Gew.-% B
S: Styrol; AN: Acrylnitril; n-BA: n-Butylacrylat; B: Butadien;
BDA: Butandiol-1,4-diacrylat

### Beispiel 2 - 4

Die Pfropfcopolymerisate wurden analog zu Beispiel 1 hergestellt mit folgenden Änderungen im Aufbau

| Beispiel | Änderungen | |
|---|---|---|
| | Stufe A | Stufe C |
| 2 | 72 S/26 AN/2 BDA | 72 S/27 AN/1 BDA |
| 3 | 75 S/23 AN/2 BDA | 75 S/24 AN/1 BDA |
| 4 | 78 S/20 AN/2 BDA | 78 S/21 AN/1 BDA |

### Eigenschaften von PVC-Formmassen

90 Teile S-PVC vom K-Wert 57 wurden mit 10 Teilen Pfropfcopolymerisat, 1 Teil Zinnstabilisator (Di-n-octylzinn-bis-thioglycolsäureisooctylester), 0,8 Teilen innerem Gleitmittel (Loxiol® G 16, Henkel) und 0,3 Teilen äußerem Gleitmittel (Loxiol® G 72, Henkel) in einem Walzwerk bei 160°C 8 min gewalzt. Aus dem erhaltenen Walzfell wurden durch Pressen bei 180°C die Prüfkörper hergestellt. Durchlicht und Streulicht wurden an 4 mm dicken Preßplatten mit Hilfe der Ulbricht-Kugel, die Transmission bei 400 nm an 1 mm dicken Preßplatten mit Hilfe eines Spektralphotometers gegen eine entsprechende unmodifizierte PVC-Platte ermittelt. Die Ermittlung der Doppel-V-Kerbschlagzähigkeit erfolgte nach DIN 53 453.

| Pfropfcopolymerisat aus Beispiel | Transparenz | | Transmission 400 nm [%] | Doppel-V-kerbschlagzähigkeit [kJ/m²] | | |
|---|---|---|---|---|---|---|
| | Durchlicht [%] | Streulicht [%] | | 23°C | 0°C | -20°C |
| 1 | 84 | 13 | 72 | 44 | 19 | 7 |
| 2 | 85 | 12 | 69 | 41 | 18 | 7 |
| 3 | 85 | 12 | 72 | 44 | 20 | 7 |
| 4 | 84 | 14 | 62 | 40 | 18 | 7 |

## Patentansprüche (Patentansprüche für folgende(n) Vertragsstaat(en): BE, DE, FR, GB, IT, NL)

1. Pfropfcopolymerisate, erhältlich durch
A) Emulsionspolymerisation von 5 bis 35 Gew.% eines Monomerengemischs aus
a₁) 60 - 80 Gew.-% mindestens eines vinylaromatischen Monomeren
a₂) 20 - 40 Gew.-% mindestens eines ethylenisch ungesättigten Nitrils
a₃) 0 - 10 Gew.-% mindestens eines zwei- oder mehrfach ethylenisch ungesättigten Monomeren und
a₄) 0 - 10 Gew.-% mindestens eines weiteren Monomeren,
B) anschließende Emulsionspolymerisation in Gegenwart des nach Stufe A) erhaltenen Emulsionspolymerisats von 20 - 45 Gew.-% eines Monomerengemischs aus
b₁) 50 - 75 Gew.-% mindestens eines vinylaromatischen Monomeren
b₂) 25 - 50 Gew.-% mindestens eines C₁-C₁₈ Alkylacrylats
b₃) 0 - 10 Gew.-% mindestens eines zwei- oder mehrfach ethylenisch ungesättigten Monomeren und
b₄) 0 - 10 Gew.-% mindestens eines weiteren Monomeren,
C) anschließende Emulsionspolymerisation in Gegenwart des nach Stufe B) erhaltenen Emulsionspolymerisats von 5 - 35 Gew.-% eines Monomerengemischs aus
c₁) 60 - 80 Gew.-% mindestens eines vinylaromatischen Monomeren
c₂) 20 - 40 Gew.-% mindestens eines ethylenisch ungesättigten Nitrils,
c₃) 0 - 10 Gew.-% mindestens eines zwei- oder mehrfach ethylenisch ungesättigten Monomeren und
c₄) 0 - 10 Gew.-% mindestens eines weiteren Monomeren,
D) anschließende Emulsionspolymerisation in Gegenwart des nach Stufe C) erhaltenen Emulsionspolymerisats von 15 - 45 Gew.-% eines Monomerengemischs aus
d₁) 80 - 99,9 Gew.-% mindestens eines C₁-C₁₈-Alkylacrylats
d₂) 0,1 - 10 Gew.-% mindestens eines zwei oder mehrfach ethylenisch ungesättigten Monomeren und
d₃) 0 - 20 Gew.-% mindestens eines weiteren Monomeren,
wobei sich die Gewichtsprozente der in den Stufen A) bis D) eingesetzten Monomerengemische auf das Pfropfcopolymerisat beziehen und sich auf 100 Gew.% addieren.

2. Verfahren zur Herstellung von Pfropfcopolymerisaten gemäß Anspruch 1, dadurch gekennzeichnet, daß man es gemäß den dort genannten Maßnahmen durchführt.

3. Thermoplastische Formmassen, enthaltend 2 - 40 Gew.-% eines Pfropfcopolymerisats gemäß Anspruch 1.

4. Thermoplastische Formmassen, enthaltend
60 - 98 Gew.-% Polyvinylchlorid oder eines Vinylchloridcopolymeren mit mindestens 80 Gew.-% Vinylchlorideinheiten oder chloriertes Polyvinylchlorid und
2 - 40 Gew.-% eines Pfropfcopolymerisats gemäß Anspruch 1.

5. Formteile, hergestellt aus thermoplastischen Formmassen gemäß Anspruch 3 oder 4.

## Patentansprüche (Patentansprüche für folgende(n) Vertragsstaat(en): ES)

1. Verfahren zur Herstellung von Pfropfcopolymerisaten, dadurch gekennzeichnet, daß man die folgenden Schritte ausführt:
A) Emulsionspolymerisation von 5 bis 35 Gew.% eines Monomerengemischs aus
a₁) 60 - 80 Gew.-% mindestens eines vinylaromatischen Monomeren
a₂) 20 - 40 Gew.-% mindestens eines ethylenisch ungesättigten Nitrils
a₃) 0 - 10 Gew.-% mindestens eines zwei- oder mehrfach ethylenisch ungesättigten Monomeren und
a₄) 0 - 10 Gew.-% mindestens eines weiteren Monomeren,
B) anschließende Emulsionspolymerisation in Gegenwart des nach Stufe A) erhaltenen Emulsionspolymerisats von 20 - 45 Gew.-% eines Monomerengemischs aus
b₁) 50 - 75 Gew.-% mindestens eines vinylaromatischen Monomeren
b₂) 25 - 50 Gew.-% mindestens eines C₁-C₁₈ Alkylacrylats
b₃) 0 - 10 Gew.-% mindestens eines zwei- oder mehrfach ethylenisch ungesättigten Monomeren und
b₄) 0 - 10 Gew.-% mindestens eines weiteren Monomeren,
C) anschließende Emulsionspolymerisation in Gegenwart des nach Stufe B) erhaltenen Emulsionspolymerisats von 5 - 35 Gew.-% eines Monomerengemischs aus
c₁) 60 - 80 Gew.-% mindestens eines vinylaromatischen Monomeren
c₂) 20 - 40 Gew.-% mindestens eines ethylenisch ungesättigten Nitrils,
c₃) 0 - 10 Gew.-% mindestens eines zwei- oder mehrfach ethylenisch ungesättigten Monomeren und
c₄) 0 - 10 Gew.-% mindestens eines weiteren Monomeren,
D) anschließende Emulsionspolymerisation in Gegenwart des nach Stufe C) erhaltenen Emulsionspolymerisats von 15 - 45 Gew.-% eines Monomerengemischs aus
d₁) 80 - 99,9 Gew.-% mindestens eines C₁-C₁₈-Alkylacrylats
d₂) 0,1 - 10 Gew.-% mindestens eines zwei oder mehrfach ethylenisch ungesättigten Monomeren und
d₃) 0 - 20 Gew.-% mindestens eines weiteren Monomeren,
wobei sich die Gewichtsprozente der in den Stufen A) bis D) eingesetzten Monomerengemische auf das Pfropfcopolymerisat beziehen und sich auf 100 Gew.% addieren.

2. Verfahren zur Herstellung von Pfropfcopolymerisaten gemäß Anspruch 1, dadurch gekennzeichnet, daß man es gemäß den dort genannten Maßnahmen durchführt.

3. Thermoplastische Formmassen, enthaltend 2 - 40 Gew.-% eines Pfropfcopolymerisats gemäß Anspruch 1.

4. Thermoplastische Formmassen, enthaltend
60 - 98 Gew.-% Polyvinylchlorid oder eines Vinylchloridcopolymeren mit mindestens 80 Gew.-% Vinylchlorideinheiten oder chloriertes Polyvinylchlorid und
2 - 40 Gew.-% eines Pfropfcopolymerisats gemäß Anspruch 1.

5. Formteile, hergestellt aus thermoplastischen Formmassen gemäß Anspruch 3 oder 4.

## Claims (Claims for the following Contracting State(s): BE, DE, FR, GB, IT, NL)

1. A graft copolymer, obtainable by
A) emulsion polymerization of from 5 to 35% by weight of a monomer mixture of
a₁) 60-80% by weight of one or more vinylaromatic monomers,
a₂) 20-40% by weight of one or more ethylenically unsaturated nitriles,
a₃) 0-10% by weight of one or more di- or polyethylenically unsaturated monomers and
a₄) 0-10% by weight of one or more further monomers,
B) subsequent emulsion polymerization, in the presence of the emulsion polymer obtained in stage A), of 20-45% by weight of a monomer mixture of
b₁) 50-75% by weight of one or more vinylaromatic monomers,
b₂) 25-50% by weight of one or more C₁-C₁₈-alkyl acrylates,
b₃) 0-10% by weight of one or more di- or polyethylenically unsaturated monomers and
b₄) 0-10% by weight of one or more monomers,
C) subsequent emulsion polymerization, in the presence of the emulsion polymer obtained in stage B), of 5-35% by weight of a monomer mixture of
c₁) 60-80% by weight of one or more vinylaromatic monomers,
c₂) 20-40% by weight of one or more ethylenically unsaturated nitriles,
c₃) 0-10% by weight of one or more di- or polyethylenically unsaturated monomers and
c₄) 0-10% by weight of one or more further monomers and
D) subsequent emulsion polymerization, in the presence of the emulsion polymer obtained in stage C), of 15-45% by weight of a monomer mixture of
d₁) 80-99.9% by weight of one or more C₁-C₁₈-alkyl acrylates,
d₂) 0.1-10% by weight of one or more di- or polyethylenically unsaturated monomers and
d₃) 0-20% by weight of one or more further monomers,
the percentages by weight of the monomer mixtures used in stages A) to D) being based on the graft copolymer and summing to 100% by weight.

2. A process for the preparation of a graft copolymer as claimed in claim 1, which is carried out by the measures stated there.

3. A thermoplastic molding material containing 2-40% by weight of a graft copolymer as claimed in claim 1.

4. A thermoplastic molding material containing 60-98% by weight of polyvinyl chloride or of a vinyl chloride copolymer containing not less than 80% by weight of vinyl chloride units or postchlorinated polyvinyl chloride and
2-40% by weight of a graft copolymer as claimed in claim 1.

5. A molding produced from a thermoplastic molding material as claimed in claim 3 or 4.

## Claims (Claims for the following Contracting State(s): ES)

1. A process for the preparation of a graft copolymer, which comprises the following steps:
A) emulsion polymerization of from 5 to 35% by weight of a monomer mixture of
a₁) 60-80% by weight of one or more vinylaromatic monomers,
a₂) 20-40% by weight of one or more ethylenically unsaturated nitriles,
a₃) 0-10% by weight of one or more di- or polyethylenically unsaturated monomers and
a₄) 0-10% by weight of one or more further monomers,
B) subsequent emulsion polymerization, in the presence of the emulsion polymer obtained in stage A), of 20-45% by weight of a monomer mixture of
b₁) 50-75% by weight of one or more vinylaromatic monomers,
b₂) 25-50% by weight of one or more C₁-C₁₈-alkyl acrylates,
b₃) 0-10% by weight of one or more di- or polyethylenically unsaturated monomers and
b₄) 0-10% by weight of one or more monomers,
C) subsequent emulsion polymerization, in the presence of the emulsion polymer obtained in stage B), of 5-35% by weight of a monomer mixture of
c₁) 60-80% by weight of one or more vinylaromatic monomers,
c₂) 20-40% by weight of one or more ethylenically unsaturated nitriles,
c₃) 0-10% by weight of one or more di- or polyethylenically unsaturated monomers and
c₄) 0-10% by weight of one or more further monomers and
D) subsequent emulsion polymerization, in the presence of the emulsion polymer obtained in stage C), of 15-45% by weight of a monomer mixture of
d₁) 80-99.9% by weight of one or more C₁-C₁₈-alkyl acrylates,
d₂) 0.1-10% by weight of one or more di- or polyethylenically unsaturated monomers and
d₃) 0-20% by weight of one or more further monomers,
the percentages by weight of the monomer mixtures used in stages A) to D) being based on the graft copolymer and summing to 100% by weight.

2. A process for the preparation of a graft copolymer as claimed in claim 1, which is carried out by the measures stated there.

3. A thermoplastic molding material containing 2-40% by weight of a graft copolymer as claimed in claim 1.

4. A thermoplastic molding material containing 60-98% by weight of polyvinyl chloride or of a vinyl chloride copolymer containing not less than 80% by weight of vinyl chloride units or postchlorinated polyvinyl chloride and
2-40% by weight of a graft copolymer as claimed in claim 1.

5. A molding produced from a thermoplastic molding material as claimed in claim 3 or 4.

## Revendications (Revendications pour l'(les) Etat(s) contractant(s) suivant(s): BE, DE, FR, GB, IT, NL)

1. Copolymères greffés, obtenus par
A) polymérisation en émulsion de 5 à 35% en poids d'un mélange de monomères composé de
a₁) 60-80% en poids d'au moins un monomère vinylaromatique,
a₂) 20-40% en poids d'au moins un nitrile à insaturation éthylénique,
a₃) 0-10% en poids d'au moins un monomère ayant au moins deux insaturations éthyléniques et
a₄) 0-10% en poids d'au moins un autre monomère,
B) polymérisation en émulsion subséquente, en présence du produit de polymérisation en émulsion obtenu dans l'étape A), de 20 à 45% en poids d'un mélange de monomères composé de
b₁) 50-75% en poids d'au moins un monomère vinylaromatique,
b₂) 25-50% en poids d'au moins un acrylate d'alkyle en C₁-C₁₈,
b₃) 0-10% en poids d'au moins un monomère ayant au moins deux insaturations éthyléniques et
b₄) 0-10% en poids d'au moins un autre monomère,
C) polymérisation en émulsion subséquente, en présence du produit de polymérisation en émulsion obtenu dans l'étape B), de 5 à 35% en poids d'un mélange de monomères composé de
c₁) 60-80% en poids d'au moins un monomère vinylaromatique,
c₂) 20-40% en poids d'au moins un nitrile à insaturation éthylénique,
c₃) 0-10% en poids d'au moins un monomère ayant au moins deux insaturations éthyléniques et
c₄) 0-10% en poids d'au moins un autre monomère,
D) polymérisation en émulsion subséquente, en présence du produit de polymérisation en émulsion obtenu dans l'étape C), de 15 à 45% en poids d'un mélange de monomères composé de
d₁) 80-99,9% en poids d'au moins un acrylate d'alkyle en C₁-C₁₈,
d₂) 0,1-10% en poids d'au moins un monomère ayant au moins deux insaturations éthyléniques et
d₃) 0-20% en poids d'au moins un autre monomère,
les pourcentages en poids des mélanges de monomères mis en réaction dans les étapes A) à D) se rapportant au copolymère greffé et leur somme étant égale à 100% en poids.

2. Procédé de préparation de copolymères greffés selon la revendication 1, caractérisé en ce qu'on l'exécute en prenant les dispositions indiquées dans cette revendication.

3. Masses à mouler thermoplastiques, contenant de 2 à 40% en poids d'un copolymère greffé selon la revendication 1.

4. Masses à mouler thermoplastiques, contenant
60 à 98% en poids de poly(chlorure de vinyle) ou d'un copolymère de chlorure de vinyle qui contient au moins 80% en poids de motifs chlorure de vinyle ou de poly(chlorure de vinyle chloré et
2 à 40% en poids d'un copolymère greffé selon la revendication 1.

5. Piècee moulées, fabriquées à partir de masses à mouler thermoplastiques selon la revendication 3 ou 4.

## Revendications (Revendications pour l'(les) Etat(s) contractant(s) suivant(s): ES)

1. Procédé de préparation de copolymères greffés, caractérisé en ce que l'on conduit les étapes suivantes:
A) polymérisation en émulsion de 5 à 35% en poids d'un mélange de monomères composé de
a₁) 60-80% en poids d'au moins un monomère vinylaromatique,
a₂) 20-40% en poids d'au moins un nitrile à insaturation éthylénique,
a₃) 0-10% en poids d'au moins un monomère ayant au moins deux insaturations éthyléniques et
a₄) 0-10% en poids d'au moins un autre monomère,
B) polymérisation en émulsion subséquente, en présence du produit de polymérisation en émulsion obtenu dans l'étape A), de 20 à 45% en poids d'un mélange de monomères composé de
b₁) 50-75% en poids d'au moins un monomère vinylaromatique,
b₂) 25-50% en poids d'au moins un acrylate d'alkyle en C₁-C₁₈,
b₃) 0-10% en poids d'au moins un monomère ayant au moins deux insaturations éthyléniques et
b₄) 0-10% en poids d'au moins un autre monomère,
C) polymérisation en émulsion subséquente, en présence du produit de polymérisation en émulsion obtenu dans l'étape B), de 5 à 35% en poids d'un mélange de monomères composé de
c₁) 60-80% en poids d'au moins un monomère vinylaromatique,
c₂) 20-40% en poids d'au moins un nitrile à insaturation éthylénique,
c₃) 0-10% en poids d'au moins un monomère ayant au moins deux insaturations éthyléniques et
c₄) 0-10% en poids d'au moins un autre monomère,
D) polymérisation en émulsion subséquente, en présence du produit de polymérisation en émulsion obtenu dans l'étape C), de 15 à 45% en poids d'un mélange de monomères composé de
d₁) 80-99,9% en poids d'au moins un acrylate d'alkyle en C₁-C₁₈,
d₂) 0,1-10% en poids d'au moins un monomère ayant au moins deux insaturations éthyléniques et
d₃) 0-20% en poids d'au moins un autre monomère,
les pourcentages en poids des mélanges de monomères mis en réaction dans les étapes A) à D) se rapportant au copolymère greffé et leur somme étant égale à 100% en poids.

2. Procédé de préparation de copolymères greffés selon la revendication 1, caractérisé en ce qu'on l'exécute en prenant les dispositions indiquées dans cette revendication.

3. Masses à mouler thermoplastiques, contenant de 2 à 40% en poids d'un copolymère greffé selon la revendication 1.

4. Masses à mouler thermoplastiques, contenant
60 à 98% en poids de poly(chlorure de vinyle) ou d'un copolymère de chlorure de vinyle qui contient au moins 80% en poids de motifs chlorure de vinyle ou de poly(chlorure de vinyle) chloré et
2 à 40% en poids d'un copolymère greffé selon la revendication 1.

5. Pièces moulées, fabriquées à partir de masses à mouler thermoplastiques selon la revendication 3 ou 4.
